Europäisches Patentamt

European Patent Office

Office européen des brevets

(11) Veröffentlichungsnummer: 0 146 957

A2

# EUROPÄISCHE PATENTANMELDUNG

(21) Anmeldenummer: 84116139.1

(22) Anmeldetag: 21.12.84

(51) Int. Cl.⁴: G 02 B 6/28

(30) Priorität: 22.12.83 DE 3346365

(43) Veröffentlichungstag der Anmeldung:
03.07.85 Patentblatt 85/27

(84) Benannte Vertragsstaaten:
DE FR GB NL

(71) Anmelder: International Standard Electric Corporation
320 Park Avenue
New York New York 10022(US)

(84) Benannte Vertragsstaaten:
FR GB NL

(71) Anmelder: Standard Elektrik Lorenz Aktiengesellschaft
Hellmuth-Hirth-Strasse 42
D-7000 Stuttgart 40(DE)

(84) Benannte Vertragsstaaten:
DE

(72) Erfinder: Köster, Wilhelm
Gerokstrasse 1
D-7147 Nussdorf(DE)

(72) Erfinder: Vollmer, Theodor
Hölderlinstrasse 53
D-7000 Stuttgard 1(DE)

(72) Erfinder: Fussgänger, Kurt. Dr.
Köningsberger Strasse 1
D-7148 Remseck(DE)

(74) Vertreter: Schmidt, Werner, Dipl.-Phys. et al,
c/o Standard Elektrik Lorenz AG Patent- und
Lizenzwesen Kurze Strasse 8 Postfach 300 929
D-7000 Stuttgart 30(DE)

(54) Optischer Multiplexer/Demultiplexer.

(57) Auf der Oberseite (7) und der Unterseite (8) eines optisch durchlässigen Plättchens (6) sind halbkugelförmige Linsen (4/1-4/z, 2) aufgebracht. Zwischen den Linsen und dem Plättchen sind Reflexionsfilter (6/1-6/z) vorhanden, die wellenlängenabhängig den einen Teil des auf sie auftreffenden Lichts reflektieren und den anderen Teil durchlassen.

EP 0 146 957 A2

Fig.1

1

W.Köster 6-1-1

Optischer Multiplexer/Demultiplexer

Die Erfindung geht aus von einem optischen Multiplexer/De-
multiplexer. Solche Multiplexer/Demultiplexer sind an sich
bekannt, z. B. aus der europäischen Patentanmeldung 68 198.
Bei dem daraus bekannten Multiplexer/Demultiplexer werden zur Ver-
einigung/Trennung der Lichtstrahlen Interferenzfilter verwendet. Diese
sind an den Begrenzungsflächen eines vielflächigen, optisch durchlässigen Körpers angeordnet.

Aufgabe der Erfindung ist es, einen einfach zu realisierenden Multi-
plexer/Demultiplexer anzugeben.

Die Lösung dieser Aufgabe erfolgt mit den im Anspruch 1
angegebenen Mitteln. Vorteilhafte Weiterbildungen sind
den Unteransprüchen zu entnehmen.

Der neue Multiplexer/Demultiplexer weist nur geringe
Verluste auf. Er ist sehr flexibel hinsichtlich der Ankopplung an Lichtwellenleiter, Sender und Empfänger und
leicht an ein gewünschtes z anpaßbar, wobei z die Anzahl
der miteinander zu vereinigenden oder der voneinander zu
trennenden Teilstrahlen ist. Der neue Multiplexer/Demulti-
plexer ist einfach herstellbar.

Die Erfindung wird anhand der Zeichnungen beispielsweise
näher erläutert. Es zeigen:

ZT/P1-Sm/R                                    - 4 -
02.12.1983

W.Köster 6-1-1

Fig. 1 und 2,    Querschnitte durch zwei Ausführungsbei-
                 spiele, und
Fig. 3 und 4     Diagramme, die das Durchlaßverhalten eines
                 Kantenfilters und eines Bandpasses angeben.

Multiplexer/Demultiplexer sind reziproke Bauelemente, d. h.
sie können sowohl als Multiplexer als auch als Demultiplexer eingesetzt werden. Die Anschlüsse des Multiplexers/
Demultiplexers sind je nach Betriebsart Eingänge oder Ausgänge. Für die Beschreibung wird die Betriebsart Demultiplexer gewählt; dementsprechend ist (zur Vereinfachung)
in der nachfolgenden Beschreibung meistens nur noch vom
Demultiplexer die Rede.

Beim Demultiplexen wird ein Lichtstrahl in seine Teilstrahlen aufgeteilt. Jeder Teilstrahl weist eine bestimmte
Wellenlänge oder einen bestimmten Wellenlängenbereich auf.
Nachfolgend wird (zur Vereinfachung) für beide Fälle nur
noch von einer (bestimmten) Wellenlänge gesprochen.

Der neue Demultiplexer besteht aus einem Substrat in Form eines Plättchens 3 mit der Dicke d aus einem optisch durchlässigen Material. Auf
dieses Plättchen sind auf seiner Ober- und Unterseite 7, 8
mehrere halbkugelförmige Linsen 4/1   bis 4/z, deren
ebene Flächen   wellenlängenselektive Schichten 6/1 bis 6/z
aufweisen, aufgebracht. Außerdem ist noch eine weitere
halbkugelförmige Linse 2 aufgebracht, die keine wellenlängenselektive Schicht aufweist.

Der zu demultiplexende Lichtstrahl, dessen Teilstrahlen
die Wellenlängen $\lambda_1$ bis $\lambda_z$ haben, wird über einen Lichtwellenleiter 1 zu dem Demultiplexer geleitet. Die beim

W.Köster 6-1-1

Demultiplexen erzeugten Teilstrahlen mit den Wellenlängen $\lambda_1$ bis $\lambda_z$ werden nach ihrem Austreten aus dem Demultiplexer über Lichtwellenleiter 5 weitergeleitet.

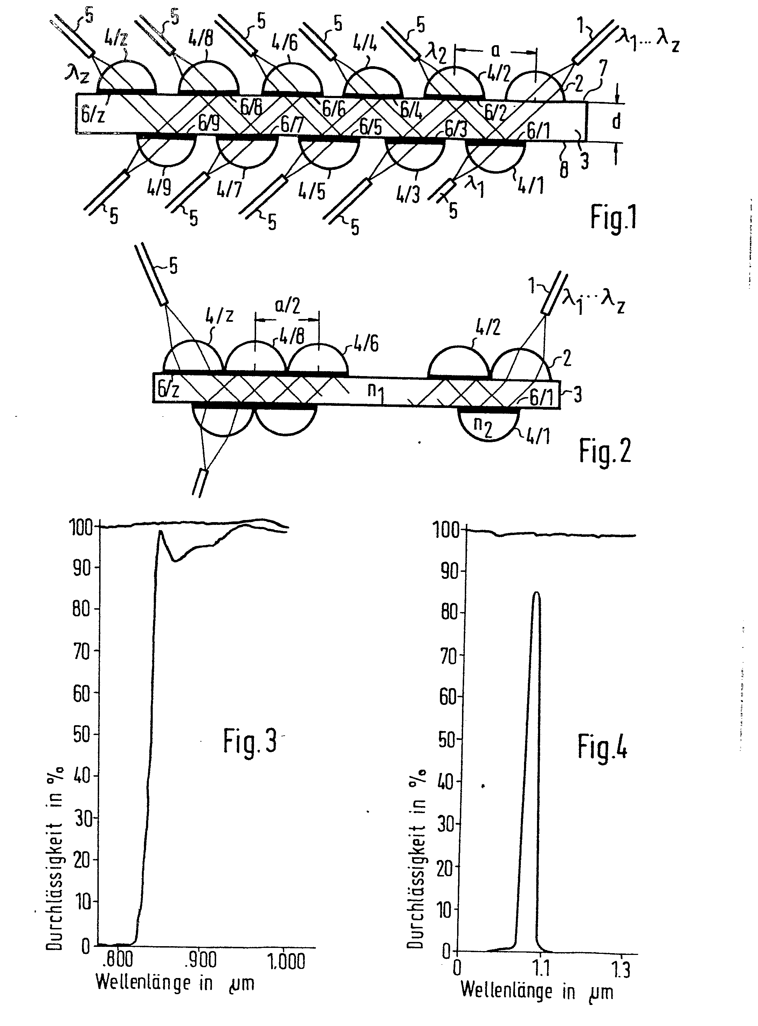

Beim Ausführungsbeispiel nach Fig. 1 weisen das Material des Plättchens 3 und der Linsen 2, 4 denselben Brechungsindex auf. Aus dem zu demultiplexenden Lichtstrahl, der dem Demultiplexer über Wellenleiter 1 zugeführt wird, macht die Linse 2 einen parallelen Lichtstrahl, der unter einem Winkel von $45^\circ$ gegen die Plättchenoberfläche 7 in das Plättchen 3 eindringt. Er trifft auf der anderen Plättchenseite 8 auf die wellenlängenselektive Schicht 6/1 der Linse 4/1. Diese Schicht läßt nur den Teilstrahl mit der Wellenlänge $\lambda_1$ durch und reflektiert die Teilstrahlen mit den übrigen Wellenlängen. Der parallele Teilstrahl mit der Wellenlänge $\lambda_1$ wird von der Linse 4/1 auf einen Wellenleiter 5 fokussiert.

Die Teilstrahlen mit den Wellenlängen $\lambda_2$ bis $\lambda_z$ treffen nach ihrer Reflexion an der wellenlängenselektiven Schicht 6/1 auf die wellenlängenselektive Schicht 6/2 der Linse 4/2 auf der anderen Seite des Plättchens. Diese Schicht läßt den Teilstrahl mit der Wellenlänge $\lambda_2$ durch und reflektiert die Teilstrahlen mit den Wellenlängen $\lambda_3$ bis $\lambda_z$. Der Teilstrahl mit der Wellenlänge $\lambda_2$ wird von der Linse 4/2 auf den Wellenleiter 5 reflektiert.

Dieser Vorgang - nämlich Durchlassen eines Teilstrahls mit einer bestimmten Wellenlänge und Reflexion der Teilstrahlen mit den übrigen Wellenlängen - wiederholt sich an den anderen wellenlängenselektiven Schichten 6/3 bis 6/z der Linsen 4/3 bis 4/z sinngemäß. Auf die letzte

W.Köster 6-1 -1

wellenlängenselektive Schicht 6/z trifft nur noch der Teilstrahl mit der Wellenlänge $\lambda_z$, auf, und dieser Teilstrahl wird von der Schicht durchgelassen. Zum Demultiplexen ist diese Schicht 6/z eigentlich nicht notwendig. Sie eignet sich jedoch dazu, eventuell vorhandenes störendes Licht mit anderen Wellenlängen als $\lambda_z$ auszufiltern.

Das Licht breitet sich in dem Plättchen 3 zick-zack-förmig von wellenlängenselektiver Schicht zu wellenlängenselektiver Schicht aus. Die Dicke d der Schicht ist bestimmt durch den gewünschten Strahlengang im Plättchen und dem Abstand a der Mittelpunkte zweier benachbarter Linsen.

Es ist für das Reflexions/Durchlassverhalten an den wellenlängenselektiven Schichten von Vorteil, wenn der Winkel zwischen der Ausbreitungsrichtung der Lichtstrahlen im Plättchen und den Ober/Unterseiten des Plättchen $45^o$ ist. Dies hat jedoch zur Folge, daß die Teilstrahlen ebenfalls unter diesem Winkel von dem Plättchen ausgehen (Demultiplexer) oder auf dieses auftreffen (Multiplexer) müssen. Diese Bedingung kann jedoch nicht immer erfüllt werden.

Andere Winkel zur Ein/Auskopplung der Teilstrahlen werden möglich, wenn die Materialien des Plättchens und der halbkugelförmigen Linsen unterschiedliche Brechungsindizes $n_1$ und $n_2$ aufweisen. Die beiden Brechungsindizes müssen so gewählt werden, daß die Brechung beim Übergang zwischen Linse und Plättchen so erfolgt, daß der Strahlengang im Plättchen mit den Begrenzungsflächen 7, 8 des Plättchens Winkel von $45^o$ bilden.

W.Köster 6-1-1

Der geringste Raumbedarf ist dann gegeben, wenn die halbkugelförmigen Linsen aneinander anstoßen. Es ist dann
$d = {}^a/2$; mögliche Zahlenwerte: $a = 3$ mm; $d = 1,5$ mm.
Diese Anordnung ist in der Fig. 2 dargestellt. Bei dieser
Anordnung wird weiterhin davon ausgegangen, daß $n_1 = n_2$
ist.

Es ist von Vorteil, die Linsen mit einer Antireflexschicht
zu bedampfen, da dann die Reflexionsverluste an den Linsenoberflächen reduziert werden. Der Multiplexer/Demultiplexer
ist so ausgestaltet, daß an ihn sowohl Lichtwellenleiter
(z. B. Lichtleitfasern) oder aber direkt Sende- oder Empfangsdioden angekoppelt werden können. Sendeelemente, die
polarisiertes Licht abgeben (z. B. Laserdioden) werden bezüglich der Polarisationsrichtung des von ihnen abgegebenen
Lichts so angeordnet, daß die Dämpfung des Lichts im Multi-
plexer/Demultiplexer minimal wird. Gleiches gilt sinngemäß
für polarisationsempfindliche Empfängerelemente. Die Durchmesser der Kerne der Lichtleitfasern, die das Licht dem
Multiplexer/Demultiplexer zuführen oder von diesem weiterleiten, werden vorzugsweise so gewählt, daß die Durchmesser
der "weiterleitenden" Lichtleitfaserkerne größer als die
Durchmesser der "zuführenden" Lichtleitfaserkerne sind.
Weiterhin werden die Abstände der Lichtleitfasern von den
Linsen so gewählt, daß im Plättchen paralleles Licht vorhanden ist.

Wie bereits erwähnt sind auf die ebenen Flächen der halbkugelförmigen Linsen wellenlängenselektive Schichten aufgebracht. Diese Schichten reflektieren den einen Teil des
auf sie auftreffenden Lichts und lassen den anderen Teil
passieren. Diese Schichten können sowohl als Bandpässe
als auch als Kantenfilter realisiert werden.

W.Köster 6-1-1

In der Fig. 3 ist das Transmissionsverhalten eines Kantenfilters als Funktion der Wellenlänge aufgezeichnet. Üblicherweise werden Transmissionswerte von 80-95 % und Reflexionswerte von > 99 % erzielt. Werden bei der Anordnung nach Fig. 1 Kantenfilter verwendet, dann muß deren Transmissionsverhalten von Linse zu Linse stetig zunehmend oder stetig abnehmend sein. Das Kantenfilter 6/1 der Linse 4/1 muß die Teilstrahlen mit den Wellenlängen $\lambda_2$ bis $\lambda_z$ reflektieren und darf nur den Teilstrahl mit der Wellenlänge $\lambda_1$ durchlassen. Das Kantenfilter 6/8 der Linse 4/8 ist für die Wellenlängen $\lambda_1$ bis $\lambda_8$ durchlässig und für die Wellenlängen $\lambda_9$ bis $\lambda_z$ reflektierend. Da die Teilstrahlen mit den Wellenlängen $\lambda_1$ bis $\lambda_7$ bereits vorher ausgekoppelt wurden, passiert nur der Teilstrahl mit der Wellenlänge $\lambda_8$ dieses Kantenfilter. Bei dieser Anordnung ist es hinsichtlich geringer Verluste von Vorteil, daß die Kantenfilter in "Durchlaßrichtung", in der der "Wirkungsgrad" geringer ist als bei der Transmission, nur von einem Teilstrahl einmal durchlaufen werden. Bei der Reflexion, von der jeweils mehrere Teilstrahlen betroffen sind, ist der "Wirkungsgrad" wesentlich größer, nämlich > 99 %.

Anstatt der Kantenfilter können auch optische Bandpaßreflexionsfilter verwendet werden. Das Durchlaßverhalten für ein solches Filter ist in der Fig. 4 dargestellt. Ein solches Filter läßt nur den Teilstrahl passieren, der in den Durchlaßbereich fällt. Alle übrigen Teilstrahlen werden reflektiert. Werden solche Filter verwendet, dann ist es ohne Bedeutung, in welcher Reihenfolge (abhängig von ihrer Durchlaßwellenlänge) die Filter angeordnet sind.

W.Köster 6-1-1

Bei dem obigen Ausführungsbeispiel sind die Reflexionsfilter auf die Linsen aufgebracht. In diesem Fall werden bei der Herstellung zuerst die halbkugelförmigen Linsen mit den wellenlängenselektiven Schichten versehen und danach die so beschichteten Linsen auf das Plättchen aufgebracht. Es ist jedoch auch möglich, die wellenlängenselektiven Schichten direkt auf das Substrat aufzubringen.

0146957

W.Köster-Th.Vollmer-K.Fußgänger 6-1-1

Patentansprüche

1. Optischer Multiplexer/Demultiplexer, d a d u r c h
g e k e n n z e i c h n e t, daß ein Substrat (3) aus
einem optisch durchlässigen Material mit zwei zueinander
parallelen Flächen (7, 8) vorgesehen ist, daß auf den
beiden Flächen Ein/Aus-Koppelstellen (4/1-4/z, 2) vorgesehen sind, daß zwischen nahezu allen Ein/Aus-Koppelstellen
(4/1-4/z) und dem Substrat (3) Reflexionsfilter (6/1-6/z)
vorhanden sind, die wellenlängenabhängig den einen Teil
des auf sie auftreffenden Lichts reflektieren und den
anderen Teil durchlassen, und daß die Lagen der Ein/Aus-
Koppelstellen auf dem Substrat so gewählt sind, daß der
Strahlengang des Lichts in dem Substrat zick-zack-förmig
von Ein/Aus-Koppelstelle zu Ein/Aus-Koppelstelle führt.

2. Optischer Multiplexer/Demultiplexer nach Anspruch 1,
dadurch gekennzeichnet, daß die Reflexionsfilter als Bandpässe
realisiert sind und daß die Bandpässe auf unterschiedliche
Wellenlängen abgestimmt sind.

3. Optischer Multiplexer/Demultiplexer nach Anspruch 1,
dadurch gekennzeichnet, daß die Reflexionsfilter als
Kantenfilter realisiert sind und daß die Kantenfilter auf
unterschiedliche Wellenlängen abgestimmt sind.

ZT/P1-Sm/R

02.12.1983

W.Köster 6-1-1

4. Optischer Multiplexer/Demultiplexer nach einem der Ansprüche 1 bis 3, dadurch gekennzeichnet, daß an den Ein/Aus-Koppelstellen Linsen vorgesehen sind, die eine nahezu halbkugelförmige Form haben.

5. Optischer Multiplexer/Demultiplexer nach Anspruch 4, dadurch gekennzeichnet, daß die Reflexionsfilter zwischen den Linsen und dem Substrat angeordnet sind.

6. Optischer Multiplexer/Demultiplexer nach Anspruch 4, dadurch gekennzeichnet, daß die Brechungsindizes für die Linsen und das Substrat unterschiedlich sind.

7. Optischer Multiplexer/Demultiplexer nach Anspruch 5, dadurch gekennzeichnet, daß die Reflexionsfilter auf die Linsen aufgebracht sind.

8. Optischer Multiplexer/Demultiplexer nach Anspruch 5, dadurch gekennzeichnet, daß die Reflexionsfilter auf das Substrat aufgebracht sind.

- 1/1 -

0146957

Fig.1

Fig.2

Fig.3

Fig.4

W. Köster 6-1-7